# EUROPÄISCHE PATENTSCHRIFT

(11) **EP 2 687 499 B1**
(45) Veröffentlichungstag und Bekanntmachung des Hinweises auf die Patenterteilung: **30.03.2016**
(21) Anmeldenummer: 13175657.9
(22) Anmeldetag: 09.07.2013
(51) Int. Cl.: C04B 28/18, C04B 40/00, C04B 40/06, C04B 28/22, C04B 111/00

(54) **VERKAUFSPACKUNG MIT EINEM FRISCHMÖRTEL BESTEHEND AUS ZWEI WASSERHALTIGEN KOMPONENTEN SOWIE DEREN VERWENDUNG**
SALES PACKAGING WITH A FRESH MORTAR AND THEIR USE
EMBALLAGE DE VENTE DOTÉ D'UN MORTIER FRAIS ET SON UTILISATION

(30) Priorität: 19.07.2012 DE 102012014338
(43) Veröffentlichungstag der Anmeldung: 22.01.2014
(73) Patentinhaber: Fels-Werke GmbH, 38640 Goslar (DE)
(72) Erfinder: Boenkendorf, Ulf, Dr., 31188 Holle (DE); Stumpf, Thomas, Dr., 38667 Bad Harzburg (DE); Lange, Christina, 38855 Wernigerode (DE); Ernst, Nancy, 38899 Stiege (DE)
(74) Vertreter: Solf, Alexander

(56) Entgegenhaltungen:
- AT-B- 410 089
- US-A- 5 026 576
- US-A1- 2004 187 740
- US-A1- 2008 178 769
- Fassa Bortolo ET AL: "MALTA FINA Feinputzmörtel auf Kalkbasis für Innenputzflächen", , 31. März 2008 (2008-03-31), Seiten 1-2, XP055131514, Gefunden im Internet: URL:http://www.fassabortolo.de/detail/prod ukte/0-maltafina/base-1/maltafina.html [gefunden am 2014-07-24]

## Beschreibung

Die Erfindung betrifft eine Verkaufspackung mit einem mineralischen Frischmörtel sowie deren Verwendung.

Eine Verkaufspackung auf dem Sachgebiet ist eine werksseitig erstellte Verkaufsaufmachung für ein einen feinteiligen Baustoff, aufweisend i. d. R. ein Gebinde mit einem wasser- und luftdichten Behälter und einer in diesem Behälter befindlichen, vorbestimmten Menge eines verwendungsfertig gemischten Werkmörtels. Die Verwendung des Mörtels erfolgt durch Öffnen des Behälters und direkte Verarbeitung des Mörtels auf der Baustelle.

Der Begriff "Verkaufspackung" beinhaltet im Rahmen der Erfindung im Minimum das Gebinde aus Behälter und Inhalt. Darüber hinaus kann die Verkaufspackung auch noch Utensilien und/oder Beipackmaterial od. dgl. enthalten.

Die Erfindung befasst sich mit Werkmörteln. Der Begriff "Werkmörtel" ist die Sammelbezeichnung für die sogenannten Werktrockenmörtel und Werkfrisch mörtel.

Werktrockenmörtel ist die Bezeichnung für Mörtel, dessen Trockenbestandteile im Werk eines Baustoffherstellers nach festen Rezepturen gemischt und in Gebinden z. B. Sackware oder lose (Silo-LKW oder Baustellensilo) ausgeliefert wird. Die Verarbeitung der Werktrockenmörtel erfolgt auf der Baustelle nach Zugabe von Wasser durch anschließendes Mischen.

Werkfrischmörtel ist die Bezeichnung für ebenfalls in Werken nach festen Rezepturen vorgemischten Mörteln, denen aber bereits werkseitig das Anmachwasser zugegeben wurde. Sie werden i. d. R. gebrauchsfertig in Mischfahrzeugen auf die Baustelle geliefert.

Gegenbegriffe zu Werkmörtel sind Baustellenmörtel und Rezepturmörtel, die traditionell auf der Baustelle ohne besondere Prüfung des Ausgangsmaterials in einem durch Erfahrungswerte bestimmten Verhältnis gemischt werden.

Die Erfindung betrifft Werkfrischmörtel.

Aus der DE 10 2007 047 479 A1 ist eine Verkaufspackung mit einem Gebinde mit einem Behälter aus Kunststoff, z. B. einem Eimer bekannt, in dem ein einkomponentiges, an der Luft härtendes Baustoffgemisch aus Quarzsand, Polybutadien und Zuschlagstoff luftdicht abgeschlossen enthalten ist.

Bekannt sind zudem Verkaufspackungen mit einem Gebinde mit einem Wasser enthaltenden, verarbeitungsfertigen, lufthärtenden, mineralischen Kalkfrischmörtel in einem Behältnis. Diese Mörtel enthalten Luftkalk als Bindemittel. Die Gebinde weisen ein wasser- und luftdichtes verschlossenes, z. B. sackartiges Behältnis aus einem flexiblen Material aus Kunststoff auf, in welchem ein Kalkfrischmörtel bestehend zumindest aus Kalkhydrat, mindestens einem Zusatzstoff, mindestens einem Zuschlagstoff und Wasser enthalten ist. Gegebenenfalls enthält der Frischmörtel noch mindestens ein Zusatzmittel. Das Gebinde wird auf der Baustelle geöffnet und der kellengerechte Mörtel ohne weiteres verarbeitet. (Technisches Merkblatt der Fassa S.p.A., Via Lazzaris, 3 - 31027 Spresiano (TV), "MALTA FINA" - Ausgabe 03/2008).

Nachteilig ist, dass der carbonatisch erhärtende Kalkmörtel nur geringe Druckfestigkeiten und nur geringe Haftscherfestigkeiten erreicht und im Wesentlichen deshalb nur als Putzmörtel eingesetzt werden kann.

Aufgabe der Erfindung ist, eine Verkaufspackung mit einem Gebinde mit einem Behälter und einem Wasser enthaltenden gebrauchsfertigen (ready to use) Frischmörtel zu schaffen, wobei der Frischmörtel höhere Druckfestigkeiten und Haftscherfestigkeiten als Luftkalkfrischmörtel gewährleistet.

Diese Aufgabe wird durch die Merkmale der Ansprüche 1 und 15 gelöst.

Die Lösung, nämlich ein Gebinde mit einem hydraulisch abbindenden Frischmörtel vorzusehen, steht in einem Widerspruch in Bezug auf ein Gebinde, das einen wasserhaltigen Frischmörtel enthalten soll, da hydraulische Bindemittel per Definition mit Wasser reagieren und erhärten. Eine Lagerung derartiger Gebinde ohne Eigenschaftsverluste erscheint somit zunächst unmöglich. Der Fachmann weiß, dass eine Verzögerung des Abbindens eines hydraulischen Bindemittels durch Zusatzmittel erreichbar ist, eine derartige Verzögerung ist aber nur für Stunden bis wenige Tage möglich und erfolgt nur innerhalb einer festgesetzten Zeitdauer. Insofern kann man aus einer ein hydraulisches Bindemittel enthaltenden Frischmörtelmasse kein Gebinde herstellen, das gewährleistet, dass über Tage oder Wochen oder Monate hinausgehend der Frischmörtel unverändert gebrauchsfertig bleibt.

Mit der Erfindung gelingt das, indem für eine Verkaufspackung zwei separate Gebinde oder Kammern mit jeweils einem luft- und wasserdicht verschlossenen Behälter vorgesehen werden und ein zweikomponentiges mineralisches Bindemittel ausgewählt wird, das unter Bildung von Calciumsilikathydrat-Phasen (CSH-Phasen) hydraulisch erhärtet, wobei eine wasserhaltige Frischmasse mit der einen Komponente des Bindemittels in einem der Behälter und eine wasserhaltige Frischmasse mit der anderen Komponente des Bindemittels in dem anderen Behälter enthalten ist. Erst durch Mischen der beiden Frischmassen nach dem Öffnen der beiden Behälter und Zusammenbringen der beiden Frischmassen ergibt sich die gebrauchsfertige Frischmörtelmasse, die mit Wasser hydraulisch erhärten kann. Demgemäß kommen erst beim Mischen der beiden Frischmassen die Bestandteile der beiden Komponenten des Bindemittels zusammen und können mit Wasser chemisch in der Frischmörtelmasse reagieren und erhärtende CSH-Phasen bilden.

Nach der Erfindung ist die eine Bindemittelkomponente ein Baukalkhydrat, nämlich ein Luftkalkhydrat - auch Kalkhydrat genannt - und/oder ein Dolomitkalkhydrat und die andere Komponente mindestens ein Puzzolan.

Luftkalkhydrat ist ein mineralisches Bindemittel, mit dem sogenannte Luftkalkmörtel hergestellt werden.

Luftkalk wird aus möglichst reinem Kalkstein mit einem CaCO₃-Gehalt von üblicherweise mindestens 95 % durch Brennen hergestellt. Beim Kalkbrennen spaltet sich Kohlendioxid ab und es entsteht Calciumoxid, das als Branntkalk anfällt. Der Branntkalk wird mit Wasser gelöscht, woraus Luftkalkhydrat resultiert.

Es wird zwischen Trocken- und Nasslöschen von Branntkalk unterschieden. Beim Nasslöschen wird ein Kalkbrei hergestellt. Beim heute industriell üblichen Trockenlöschen wird dem Branntkalk nur so viel Wasser zugegeben, dass als Endprodukt ein trockenes Pulver mit geringer Restfeuchte entsteht. Dieses Kalkhydrat kommt als Weißkalkhydrat in den Handel. Für die Zwecke der Erfindung sind sowohl nass gelöschtes als auch trocken gelöschtes Weißkalkhydrat verwendbar. Gehandelt wird das Weißkalkhydrat auf dem Bausektor i. d. R. mit der Bezeichnung "Kalkhydrat" (DIN EN 459-1).

Die Erhärtung des Weißkalkhydrats erfolgt durch die Aufnahme von Kohlendioxid aus der Luft nach folgender Formel:

Ca(OH)₂ + CO₂ + H₂O → CaCO₃ + 2H₂O

Die Reaktion verläuft langsam. Die Festigkeiten eines erhärteten Luftkalkfestmörtels sind relativ gering.

Die wichtigsten Güteanforderungen an den Luftkalk ergeben sich aus der DIN EN 459-1, in der auch die anderen bekannten Baukalke erfasst sind.

Puzzolane sind silikatische oder alumosilikatische Stoffe, die wegen ihrer geringen Calciumoxidgehalte weder hydraulisch noch nach alkalischer Anregung durch OH- oder sulfatischer Anregung durch (SO₄)²⁻ latent hydraulisch erhärten können, sondern erst durch chemische Reaktion mit Calciumhydroxid bzw. baufachsprachlich "Weißkalkhydrat" in Gegenwart von Wasser hydraulisch erhärtende Bindemittelphasen bilden. Einige Puzzolane sind amorph, andere weisen amorphe und kristalline Bestandteile oder zersetzte Kristallstrukturen auf.

Auf dem Bausektor versteht man unter Puzzolanen natürliche oder künstliche m saure, d. h. kieselsäurereiche feinanfallende oder fein gemahlene Silikate, die in der Mischung mit Wasser und Calciumhydroxid und/oder Calciumsulfat hydraulisch erhärten.

Puzzolane haben je nach künstlicher Herstellung oder natürlicher Entstehung unterschiedliche Zusammensetzungen. Sie weisen im allgemeinen einen hohen Gehalt an Kieselsäure (SiO₂) zwischen 50 und 80 % auf, wobei die Kieselsäure in einer Form vorliegt, die eine Reaktion mit Kalkhydrat bei Raumtemperaturen ermöglicht.

Der Kalkgehalt (CaO-Gehalt) der Puzzolane liegt im allgemeinen unter 10 %, kann aber auch bis 20 % betragen. Von den latent hydraulischen Stoffen unterscheiden sich die Puzzolane insbesondere durch den höheren CaO-Gehalt der latent hydraulischen Stoffe, der im allgemeinen zwischen 30 und 55 % liegt, so dass diese Stoffe durch eine bloße Anregung durch ein alkalisches Milieu selbständig reagieren und hydraulisch abbinden.

Die in den Puzzolanen enthaltene Kieselsäure ist meist überwiegend amorph und glasartig und reaktionsfähig mit Laugen oder Säuren. Insofern reagiert Calciumhydroxid z. B. in Form von Luftkalkhydrat mit der amorphen fein verteilten Kieselsäure z. B. wie folgt:

C + S + H → CSH oder genauer

Ca(OH)₂ + SiO₂ + H₂O → CaO · SiO₂ · H₂O (CSH-Phase)

oder

Calciumhydroxid + Siliciumdioxid + Wasser → Calciumsilikathydrat

Die CSH-Phase ist meist dieselbe Verbindung, die bei der Hydratation von Zement entsteht und dessen Erhärtung ergibt.

Trockenmischungen von Puzzolanen mit Baukalken und Baukalkhydraten sind bekannt und werden meist Puzzolankalke oder Trasskalke genannt.

Puzzolane natürlichen Ursprungs sind z. B. Puzzolanerde, Santorinerde, Trass, Diatomenerde, Kieselgur und Molarerde.

Industriell erzeugte Puzzolane sind z. B. Ziegelmehl, Ölschieferrückstände, Flugasche, Silikastaub, Metakaolin oder calcinierte Tone, Suevit, Phonolith, vegetabilische Flugaschen und calcinierte kieselsäurereiche Schlämme.

Die obige Aufzählung bezüglich der natürlichen und industriell hergestellten Puzzolane ist nicht vollständig, sondern beispielhaft.

Für die Mörtelverwendbarkeit von Puzzolanen ist deren "Puzzolanität" und "Kalk-Puzzolan-Reaktion" von Bedeutung.

Puzzolanität beschreibt die Eigenschaft eines Puzzolans, beim Anmachen mit Luftkalkhydrat in wässriger Lösung festigkeitsbildende Calciumsilikathydrat- und Calciumsilikataluminat-Phasen zu erzeugen. Entscheidend dabei ist das Vorhandensein der reaktionsfähigen Kieselsäure im Puzzolan und dem Reaktionspartner Ca(OH)₂.

In wässriger Lösung reagiert Ca(OH)₂ stark basisch. Bei der Kalkhydrat-Puzzolan-Reaktion lagern sich OH-Ionen der Base an die SiO₂- und Al₂O₃-Moleküle der Glasphase der Puzzolane an. Dies führt zur Abtrennung der Netzwerk bildenden Atome Si und Al von den Sauerstoff-Atomen. Die freien Si- und Al-Atome reagieren mit gelöstem Ca(OH)₂ und H₂O zu Calciumsilikathydrat- und Calciumaluminathydrat-Phasen.

Der Begriff der puzzolanischen Reaktivität beinhaltet zwei Parameter. Diese sind die maximale Bindung von Kalk und die Geschwindigkeit, in der die Kalkbindung abläuft. Beide Faktoren hängen von der Beschaffenheit der aktiven Phase und von ihrem Anteil im Puzzolan ab.

Alle Puzzolane haben einen Verbrauch an Ca(OH)₂, um hydraulisch erhärten zu können. Durch ihren geringen Anteil an CaO reagieren sie langsamer als Klinker oder Hüttensand und brauchen folglich auch länger zum Erhärten. Puzzolanhaltige Bindemittel erfordern daher eine deutlich längere feuchte Nachbehandlung.

Die Reaktivität der Puzzolane beruht zum größten Teil auf ihrer Glasphase und deren chemischer Zusammensetzung. Die Reaktivität der Glasphase hängt von ihrer spezifischen Oberfläche ab und von der Menge an eingebundenen Alkalien und OH-Gruppen.

Das oben beschriebene Reaktionsverhalten der Puzzolane ergibt sich auch bei Verwendung von Dolomitkalkhydrat.

Für die Zwecke der Erfindung werden Puzzolane ausgewählt, die vorzugsweise ein Kalkbindevermögen zwischen 0,001 und 0,02 mol/l, insbesondere zwischen 0,003 und 0,015 mol/l CaO pro Gramm Puzzolan aufweisen. Das Kalkbindevermögen kann nach einem sogenannten Einhängeversuch ermittelt werden, mit dem Puzzolane vergleichsweise beurteilt werden können. Im Einhängeversuch werden die unbehandelten Puzzolane in eine gesättigte Ca(OH)₂-Lösung gehängt und nach 7 Tagen und länger der Calciumoxid-Restgehalt der Lösung titrimetrisch gemäß DIN EN 196-5 Abschnitt 9.3 ermittelt. Obiges Verfahren zur Feststellung des Kalkbindevermögens der Puzzolane ist angelehnt an das Verfahren, das von Schwiete, H. E. & Ludwig, U. (1961b): Die Bindung des freien Kalkes und die bei den Trass-Kalk-Reaktionen entstehenden Neubildungen. - 59 S., Köln und Opladen (Westdeutscher Verlag) beschrieben wird.

Für die Zwecke der Erfindung kann das Verfahren zur Feststellung des Kalkbindevermögens der Puzzolane durchgeführt werden, indem ein Gramm Puzzolan in 900 ml gesättigter Weißkalkhydratlösung suspendiert und bei 40° C für 7 und 28 Tage in einem geschlossenen Gefäß gelagert wird. Nach Ablauf der Lagerung wird die Lösung filtriert und im Filtrat der verbleibende CaO-Gehalt nach DIN EN 196-5 bestimmt. Die Kalkbindung errechnet sich als Differenz aus dem CaO-Anteil in der gesättigten Lösung und dem CaO-Anteil der Lösung nach Lagerung des Puzzolans.

Erfindungsgemäß werden Weißkalkhydrat verwendet mit Ca(OH)₂-Gehalten über 80, insbesondere über 90 Gew.-%.

Nach der Erfindung weist eine erfindungsgemäße Frischmörtelverkaufspackung zwei luft- und wasserdichte Gebinde aus jeweils einem Behälter auf, in dem jeweils eine wasserhaltige, mineralische Frischmassenmischung enthalten ist. Die jeweilige Zusammensetzung der beiden Frischmassenmischungen ist so gewählt, dass beim Zusammenmischen sich die beiden Frischmassenmischungen zu dem hydraulisch erhärtenden, mineralischen Frischmörtel ergänzen. Dementsprechend enthält das eine Gebinde neben Wasser und ggf. anderen üblichen Mörtelbestandteilen Weißkalkhydrat und das andere Gebinde neben Wasser und ggf. anderen üblichen Mörtelbestandteilen mindestens einen feinteiligen Puzzolan.

Die Menge des Weißkalkhydrats in der einen Frischmassenmischung entspricht dabei zumindest der erforderlichen Reaktionsmenge an CaO für eine vollständige Kalkbindung des Puzzolans für die hydraulische Reaktion des Puzzolans, z. B. vorermittelt nach dem oben beschriebenen Verfahren zur Ermittlung des Kalkbindevermögens eines Puzzolans. Eine überschüssige Menge an Weißkalkhydrat ist unschädlich. Unschädlich ist auch eine überschüssige Menge an Puzzolan, der unreagiert als Füllstoff im Mörtel wirken kann.

Erfindungsgemäß werden die Puzzolane feinteilig, vorzugsweise mit spezifischen Oberflächen von mindestens 3000 cm²/g nach Blaine verwendet. Insbesondere sollte die spezifische Oberfläche je nach Puzzolan zwischen 5000 und 9000 cm²/g nach Blaine liegen.

Besonders geeignet sind Puzzolane mit SiO₂-Gehalten zwischen 35 und 80 Gew.-% und Al₂O₃-Gehalten zwischen 3 und 40 Gew.-% und CaO-Gehalten zwischen 0 und 9, insbesondere bis 6 Gew.-%, vorzugsweise bis 4 Gew.-%.

Mindestens eine der beiden Frischmassenmischungen enthält i. d. R. mindestens ein Zusatzmittel, z. B. ausgewählt aus der Gruppe von Verflüssigern, Verdickern, Verzögerern, Beschleunigern, Stabilisierungsmittel, Rheologiestellmitteln, Zusatzmitteln zur Einstellung des wasserrückhaltevermögens, Dispergiermitteln, Dichtungsmitteln, Luftporenmitteln sowie deren Mischungen. Vorzugsweise enthalten beide Frischmassen mindestens ein Zusatzmittel. Die vorgenannten Zusatzmittel sind dem Fachmann als solche bekannt. Er wird die jeweiligen Zusatzmittel - an den Einzelfall angepasst - auswählen und die einzusetzende Menge jeweils speziell abstimmen.

Unter dem Begriff "Zusatzmittel" sind im Rahmen der vorliegenden Erfindung insbesondere auch Betonzusatzmittel nach DIN 1045 zu verstehen, die z. B. die Verarbeitbarkeit, das Erhärten und Erstarren beeinflussen, wobei ihr Volumenanteil weniger als 5 Vol.-% betragen sollte.

Des Weiteren kann mindestens eine der beiden Frischmassenmischungen mindestens einen Zusatzstoff enthalten. Vorzugsweise enthalten beide Frischmassen mindestens einen Zusatzstoff. Unter den Begriff "Zusatzstoff" fallen im Rahmen der vorliegenden Erfindung insbesondere auch Betonzusatzstoffe nach DIN 1045. Es handelt sich um feinteilige Zusätze, welche bestimmte Bindemitteleigenschaften beeinflussen und als Volumenbestandteil zu berücksichtigen sind. Vorzugsweise werden Zusatzstoffe aus der Gruppe von anorganischen und/oder mineralischen Zusatzstoffen verwendet, z. B. Gesteinsmehle, Flugaschen, Bentonite, Sande, Pigmente und Farbstoffe sowie deren Mischungen. Die vorgenannten Zusatzstoffe sind dem Fachmann als solche bekannt. Er wird die einzelnen Zusatzstoffe - angepasst an den jeweiligen Einzelfall - auswählen und mengenmäßig speziell abstimmen.

Zudem können die beiden Frischmassenmischungen mindestens einen Zuschlagstoff enthalten. Vorzugsweise enthalten beide Frischmassen mindestens einen Zuschlagstoff. Unter dem Begriff "Zuschlagstoff" fallen im Rahmen der vorliegenden Erfindung insbesondere Betonzuschläge nach DIN 1045. Bei den Zuschlägen handelt es sich um Füllstoffe mit Korngrößen, die für die jeweilige Bindemittelmischung geeignet sind. Als Zuschläge können z. B. auch Leichtzuschläge verwendet werden, z. B. mit einer Kornrohdichte von bis zu 2,2 kg/dm³. Die Leichtzuschläge werden z. B. ausgewählt aus der Gruppe von vulkanischem Gestein, Perlit, Vermiculit, Bimsschaum- und Blähglas, Blähton, Blähschiefer, Styropor, Tuff, Blähglimmer, Lavakies, Lavasand, Schaumkunststoffen und deren Mischungen. Dabei sollte im Rahmen der vorliegenden Erfindung der Leichtzuschlagstoff Korngrößen von höchstens 2 mm, insbesondere von höchstens 1 mm aufweisen.

Es ist jedoch auch möglich, dass die erfindungsgemäßen Frischmassenmischungen Zuschläge aus dichtem Gestein, insbesondere mit einer Kornrohdichte von über 2,2 kg/dm³ enthalten. Dabei kann es sich um Zuschläge aus der Gruppe von Kalkstein, Quarzsand, Baryt, Magnetit, Hämatit, Metall- und Schwermetallschlacken, Flußkies, Flußsand, Splitt, Schotter und deren Mischungen handeln. Der Zuschlag aus dichtem Gestein sollte Korngrößen von maximal 2 mm, insbesondere von maximal 1 mm aufweisen.

Weiterhin kann es im Rahmen der vorliegenden Erfindung vorteilhaft sein, wenn die Frischmassenmischungen Fasern enthalten, welche z. B. ausgewählt sind aus der Gruppe der Kunststofffasern, Metallfasern, Holzfasern und mineralischen Fasern.

Weitergehende Einzelheiten zu den Begriffen "Zusatzmitteln", "Zusatzstoff" und "Zuschlag" sind enthalten in Römpp Chemielexikon, 10. Aufl., Georg Thieme Verlag, Stuttgart/New York, Bd. 1, 1998, S. 419 und 420.

Nach einer bevorzugten Ausführungsform der Erfindung bestehen die Behälter der beiden Frischmassengebinde aus flexiblem Kunststoff, z. B. in Form von Kunststoffsäcken oder -schläuchen, oder es wird ein flexibler Behälter mit einer Trennwand für beide Frischmassenmischungen verwendet. Es können aber auch zweckmäßigerweise Eimer od. dgl. feste Behältnisse wie Kartuschen für die Frischmassenmischungen vorgesehen werden. Außerdem kann vorgesehen sein z. B. einen flexiblen Behälter, z. B. einen Kunststoffsack mit einem festen Behältnis, z. B. einem Eimer zu kombinieren.

Zweckmäßig ist zudem, die beiden zusammengehörenden Behältnisse paarweise miteinander zu koppeln bzw. aneinander zu befestigen, so dass eine einzelne, einstückige Verkaufsaufmachung daraus resultiert, die die beiden Gebinde enthält. Beispielsweise kann es sich dabei um eine separate Folienverpackung, z. B. eine separate Schrumpffolienverpackung handeln, die die beiden Gebinde umgibt, so dass eine einzelne Verkaufsverpackung daraus resultiert. Es kann aber auch vorgesehen sein, die flexiblen aus Kunststoff bestehenden Behälter aneinander zu schweißen oder zu kleben oder auf andere Art und Weise fest zusammen zu fügen, oder eine flexible Trennwand in ein Gebinde fest zu integrieren.

Erfindungsgemäß weisen die Frischmassenmischungen in den beiden Gebinden Frischmassenrohdichten gemessen nach DIN EN 1015-6 zwischen 1,5 und 2,1, insbesondere zwischen 1,6 und 1,9 kg/dm³ und Ausbreitmaße gemessen nach EN 1015-3 zwischen 15 und 25, insbesondere zwischen 15 und 20 cm auf. Der Wassergehalt liegt vorzugsweise zwischen 15 und 45, insbesondere zwischen 20 und 30 Gew.-%. Der Wasser-Feststofffaktor der beiden Frischmassenmischungen sollte zweckmäßigerweise zwischen 0,2 und 0,3 liegen.

Die Frischmassenmischungen werden zur Herstellung der hydraulisch erhärtenden Frischmörtelmischungen den Behältnissen entnommen und mit einfachen Mischern zusammengemischt und anschließend der Frischmörtel bestimmungsgemäß verbaut.

**Beispiel einer Gebindezusammensetzung**

| | | Komponente A | Komponente A |
|---|---|---|---|
| | | 1. Kammer | 2. Kammer |
| Bindemittel | Weißkalkhydrat | 9,4 % | |
| | Traßmehl | | 12,8 % |
| Füllstoff | Kalksteinmehl < 90 µm | 8,8 % | 5,8 % |
| Zuschlag | Kalksteinbrechsand 0,1-0,4 mm | 20,3 % | 20,7 % |
| Additive | Methylcellulose | 0,1 % | 0,2 % |
| | Verflüssiger | 0,4 % | 0,4 % |
| | Stellmittel | 0,1 % | 0,1 % |
| Wasser | | 10,9 % | 10,0 % |

Kern der Erfindung ist somit eine Verkaufspackung (Gebinde) enthaltend die Mischungsbestandteile eines hydraulisch erhärtenden, wasserhaltigen, mineralischen Frischmörtels, aufweisend mindestens zwei Gebinde mit jeweils einem wasser- und luftdichten Behälter, jeweils gefüllt mit einer Teilmenge des Frischmörtels in Form einer wasserhaltigen, mineralischen Frischmasse, wobei die eine Frischmasse neben Wasser und mindestens einem Mörtelzusatzstoff nur Luftkalkhydrat und/oder Dolomitkalkhydrat als den einen Bindemittelbestandteil des hydraulischen Frischmörtels und die andere Frischmasse neben Wasser und mindestens einem Mörtelzusatzstoff mindestens einen mit dem Kalkhydrat hydraulisch reaktionsfähigen Puzzolan als den anderen Bindemittelbestandteil des hydraulischen Frischmörtels enthält, wobei die Menge des Hydrats auf die Menge des Puzzolans für eine hydraulische Erhärtung des Frischmörtels zu einem Festmörtel nach einem Zusammenmischen der beiden Frischmassen abgestimmt ist.

Vorteilhaft ist, wenn Zusatzstoffe in Form mindestens eines Gesteinsmehls verwendet wird. Zweckmäßig ist die Verwendung von Kalksteinmehl und/oder Quarzmehl mit den üblicherweise verwendeten Feinheiten und Kornverteilungen, die der Fachmann mit Bezug auf die erwünschten Frischmörtel- und Festmörteleigenschaften einstellt.

Weiterhin ist vorteilhaft, wenn mindestens eine Frischmasse ein Mörtel- und/oder Betonzusatzmittel enthält. Von den oben aufgezählten Zusatzmitteln wird insbesondere ein Fließmittel und/oder ein Wasserretentionsmittel und/oder ein Stellmittel und/oder Antiabsetzmittel eingesetzt.

Darüber hinaus kann mindestens eine Frischmasse einen Mörtelzuschlagstoff enthalten, wobei zweckmäßigerweise die maximale Korngröße des Zuschlagstoffs unter 2 mm, insbesondere unter 1 mm liegen sollte. Die Kornverteilung des Zuschlagstoffs wählt der Fachmann mit Bezug auf die erwünschten Frischmörtel- und Festmörteleigenschaften aus.

Eine erfindungsgemäße Verkaufspackung sollte gewichtsmäßig abgestellt sein auf das Händeln des Gebindes durch eine Person. Demgemäß sollte das Gewicht der Verkaufspackung zweckmäßigerweise zwischen 10 und 25, insbesondere zwischen 12 und 20 kg liegen.

Vorteilhaft ist, wenn das Gewichts- und/oder Mengenverhältnis der beiden Behälter zwischen 2:1 und 1:2, insbesondere bei 1:1 liegt. Bei diesen Verhältnissen lassen sich die beiden Frischmassen auf einfache Weise nach dem Zusammenbringen der Frischmassen ohne besonderen Aufwand leicht mischen und dabei homogenisieren zu dem erwünschten hydraulisch erhärtenden Frischmörtel. In diesem Zusammenhang ist weiterhin von Vorteil, wenn die Mörtelbestandteile der beiden Frischmassen bis auf die Bindemittelbestandteile Kalkhydrat und Puzzolan gleich sind. Dies erleichtert die Herstellung der Frischmassen, indem eine Frischmassenmenge hergestellt wird, die für beide Teilmengen ausreicht und anschließend ein Teil dieser Frischmasse mit dem Kalkhydrat und die andere Frischmasse mit dem Puzzolan versetzt wird. Gleich bedeutet, dass hauptsächlich die gleichen Zusatzmittel und/oder Zusatzstoffe und/oder Zuschlagstoffe vorliegen. Es kann in bestimmten im Rahmen der Erfindung liegenden Vorgaben aber auch vorgesehen werden, Frischmassen mit unterschiedlichen Mörtelbestandteilen herzustellen, die nach dem Zusammenmischen sich zu einer optimalen Frischmörtelmischung ergänzen.

Die Behälter der erfindungsgemäßen Verkaufspackung bestehen vorzugsweise aus Kunststoff, z. B. aus Eimern. Vorteilhaft ist, wenn die Behälter aus Kunststoff aus einem flexiblen Kunststoff in Form von Säcken oder Schläuchen bestehen und wenn z. B. die Kunststoffsäcke oder -schläuche miteinander verbunden sind, beispielsweise durch eine Schweißnaht oder wenn die Kunststoffsäcke oder -schläuche einteilig miteinander verbunden sind und lediglich die Behälter wasser- und luftdicht voneinander abgetrennt sind.

Es hat sich gezeigt, dass es vorteilhaft ist, wenn die Frischmassen Rohdichten, gemessen nach EN 1015-6 zwischen 1,5 und 2,1, insbesondere zwischen 1,6 und 1,9 aufweisen. Der Wassergehalt der Frischmassen liegt vorzugsweise zwischen 15 und 40 %, insbesondere zwischen 20 und 30 Gew.-%. Die Wasser/Feststoffwerte werden vorzugsweise eingestellt zwischen 0,2 und 0,4 , insbesondere zwischen 0,2 und 0,3.

Die erfindungsgemäße Verkaufspackung wird verwendet zur Herstellung eines kellengerechten gebrauchsfertigen latent hydraulisch erhärtenden mineralischen Frischmörtels, in dem die beiden paarweise zusammen gehörenden Behälter der Verkaufspackung geöffnet und entleert werden, wobei die beiden mengenmäßig und nach der Zusammensetzung aufeinander abgestimmten Frischmassen in einen Mischbehälter gegeben und anschließend miteinander gemischt werden, so dass die Bestandteile der beiden Frischmassen einen latent hydraulisch härtenden Frischmörtel ergeben, der ohne weiteres verarbeitbar ist und in dem die Bestandteile der Frischmörtelmassen homogen und optimal verteilt vorliegen.

## Patentansprüche

1. Verkaufspackung (Gebinde) enthaltend die Mischungsbestandteile eines hydraulisch erhärtenden, wasserhaltigen, mineralischen Frischmörtels, aufweisend mindestens zwei Gebinde mit jeweils einem wasser- und luftdichten Behälter, jeweils gefüllt mit einer Teilmenge des Frischmörtels in Form einer wasserhaltigen, mineralischen Frischmasse, wobei die eine Frischmasse neben Wasser und mindestens einem Mörtelzusatzstoff nur Luftkalkhydrat und/oder Dolomitkalkhydrat als den einen Bindemittelbestandteil des hydraulischen Frischmörtels und die andere Frischmasse neben Wasser und mindestens einem Mörtelzusatzstoff mindestens einen mit dem Kalkhydrat hydraulisch reaktionsfähigen Puzzolan als den anderen Bindemittelbestandteil des hydraulischen Frischmörtels enthält, wobei die Menge des Hydrats auf die Menge des Puzzolans für eine hydraulische Erhärtung des Frischmörtels zu einem Festmörtel nach einem Zusammenmischen der beiden Frischmassen abgestimmt ist.

2. Verkaufspackung nach Anspruch 1,
**dadurch gekennzeichnet, dass**
als Mörtelzusatzstoff mindestens ein Gesteinsmehl, insbesondere ein Kalksteinmehl und/oder ein Quarzmehl und/oder anderes Gesteinsmehl verwendet ist.

3. Verkaufspackung nach Anspruch 1 und/oder 2,
**dadurch gekennzeichnet, dass**
mindestens eine Frischmasse mindestens ein Mörtel- und/oder Betonzusatzmittel enthält, insbesondere ein Fließmittel und/oder ein Wasserretentionsmittel und/oder ein Stellmittel und/oder Antiabsetzmittel und/oder Beschleuniger.

4. Verkaufspackung nach einem oder mehreren der Ansprüche 1 bis 3, **dadurch gekennzeichnet, dass**
mindestens eine Frischmasse mindestens einen Mörtelzuschlagstoff enthält, wobei vorzugsweise die maximale Korngröße des Zuschlagstoffs _{<} 3 mm, insbesondere _{<} 1 mm ist.

5. Verkaufspackung nach einem oder mehreren der Ansprüche 1 bis 4, **dadurch gekennzeichnet, dass**
das Gewicht der Verkaufspackung zwischen 10 und 25 kg, insbesondere zwischen 12 und 20 kg liegt.

6. Verkaufspackung nach einem oder mehreren der Ansprüche 1 bis 5, **dadurch gekennzeichnet, dass**
das Gewichts- und/oder Volumenverhältnis der beiden Behälter zwischen 2:1 und 1:2 liegt.

7. Verkaufspackung nach Anspruch 6,
**dadurch gekennzeichnet, dass**
die Mörtelbestandteile der beiden Frischmassen bis auf die Bindemittelbestandteile Kalkhydrat und Puzzolan gleich sind.

8. Verkaufspackung nach einem oder mehreren der Ansprüche 1 bis 7, **dadurch gekennzeichnet, dass**
die Behälter aus Kunststoff bestehen.

9. Verkaufspackung nach Anspruch 8,
**dadurch gekennzeichnet, dass**
die Behälter aus flexiblen Kunststoffsäcken oder Kunststoffschläuchen bestehen.

10. Verkaufspackung nach Anspruch 9,
**dadurch gekennzeichnet, dass**
die Gebinde miteinander verbunden sind, insbesondere die Behälter miteinander verschweißt sind, dabei vorzugsweise einteilig ausgebildet und zueinander abgedichtet sind, oder die Gebinde durch eine Umverpackung, z. B. durch eine Schrumpffolie zusammengefügt sind.

11. Verkaufspackung nach einem oder mehreren der Ansprüche 1 bis 10,
**dadurch gekennzeichnet, dass**
die Frischmassen Rohdichten gemessen nach EN 1015-6 zwischen 1,5 und 2,1, insbesondere zwischen 1,6 und 1,9 aufweisen.

12. Verkaufspackung nach einem oder mehreren der Ansprüche 1 bis 11,
**dadurch gekennzeichnet, dass**
die Frischmassen Wassergehalte zwischen 15 und 40, insbesondere zwischen 20 und 30 Gew.-% aufweisen.

13. Verkaufspackung nach einem oder mehreren der Ansprüche 1 bis 12,
**dadurch gekennzeichnet, dass**
die Frischmassen Wasser/Feststoffwerte zwischen 0,2 und 0,4, insbesondere zwischen 0,2 und 0,3 aufweisen.

14. Verkaufspackung nach einem oder mehreren der Ansprüche 1 bis 13,
**dadurch gekennzeichnet, dass**
die Frischmassen Ausbreitmaße gemessen nach EN 1015-3, zwi- schen 15 und 25, insbesondere zwischen 15 und 20 cm aufweisen.

15. Verwendung einer Verkaufspackung nach oder mehreren der Ansprüche 1 bis 14 zur Herstellung eines latent hydraulischen Frischmörtels,
gekennzeichnet,
die beiden paarweise zusammengehörenden Behälter der Verkaufs- packung geöffnet und entleert werden, wobei die beiden Frischmas- sen in einen Mischbehälter gegeben und miteinander gemischt wer- den, so dass die Bestandteile der beiden Frischmassen einen latent hydraulisch härtenden mineralischen Frischmörtel bilden, in dessen Masse die Bestandteile der Frischmassen homogen und optimal verteilt sind.

## Claims

1. A sale pack (container) containing the mixture constituents of a hydraulically hardening, hydrous, mineral green mortar, having at least two containers with in each case a water-tight and airtight receptacle, filled in each case with a partial quantity of the green mortar in the form of a hydrous, mineral fresh material, wherein the one fresh material in addition to water and at least one mortar additive contains only air-hardening hydrated lime and/or dolomitic hydrated lime as the one binder constituent of the hydraulic green mortar and the other fresh material in addition to water and at least one mortar admix contains at least one pozzolan which is hydraulically reactive with the hydrated lime as the other binder constituent of the hydraulic green mortar, the quantity of the hydrate being matched to the quantity of the pozzolan for hydraulic hardening of the green mortar to form a hardened mortar once the two fresh materials have been mixed together.

2. A sale pack according to Claim 1,
**characterised in that**
at least one rock flour, in particular a limestone powder and/or a quartz powder and/or other rock flour, is used as mortar admix.

3. A sale pack according to Claim 1 and/or 2,
**characterised in that**
at least one fresh material contains at least one mortar admix and/or concrete admix, in particular a flow agent and/or a water retention agent and/or a control agent and/or antisettling agent and/or accelerator.

4. A sale pack according to one or more of Claims 1 to 3,
**characterised in that**
at least one fresh material contains at least one mortar aggregate, with preferably the maximum grain size of the aggregate being < 3 mm, in particular < 1 mm.

5. A sale pack according to one or more of Claims 1 to 4,
**characterised in that**
the weight of the sale pack is between 10 and 25 kg, in particular between 12 and 20 kg.

6. A sale pack according to one or more of Claims 1 to 5,
**characterised in that**
the weight and/or volume ratio of the two receptacles is between 2:1 and 1:2.

7. A sale pack according to Claim 6,
**characterised in that**
the mortar constituents of the two fresh materials are identical except for the binder constituents hydrated lime and pozzolan.

8. A sale pack according to one or more of Claims 1 to 7,
**characterised in that**
the receptacles consist of plastics material.

9. A sale pack according to Claim 8,
**characterised in that**
the receptacles consist of flexible plastics-material bags or plastics-material tubes.

10. A sale pack according to Claim 9,
**characterised in that**
the containers are connected together, in particular the receptacles are welded together, in so doing are preferably formed in one piece and are sealed off from one another, or the containers are joined together by secondary packaging, e.g. by a shrink-wrapping film.

11. A sale pack according to one or more of Claims 1 to 10,
**characterised in that**
the fresh materials have bulk densities measured to EN 1015-6 of between 1.5 and 2.1, in particular between 1.6 and 1.9.

12. A sale pack according to one or more of Claims 1 to 11,
**characterised in that**
the fresh materials have water contents of between 15 and 40, in particular between 20 and 30, % by weight.

13. A sale pack according to one or more of Claims 1 to 12,
**characterised in that**
the fresh materials have water/solid material values of between 0.2 and 0.4, in particular between 0.2 and 0.3.

14. A sale pack according to one or more of Claims 1 to 13,
**characterised in that**
the fresh materials have slump values measured to EN 1015-3 of between 15 and 25, in particular between 15 and 20 cm.

15. Use of a sale pack according to [one] or more of Claims 1 to 14 for the production of a latent hydraulic green mortar,
characterised,
the two receptacles of the sale pack which belong together in pairs are opened and emptied, the two fresh materials being poured into a mixing receptacle and being mixed together, so that the constituents of the two fresh materials form a latent hydraulically hardening mineral green mortar, in the material of which the constituents of the fresh materials are homogeneously and optimally distributed.

## Revendications

1. Emballage de vente (colis) contenant les composants de mélange d'un mortier frais minéral, contenant de l'eau, à prise hydraulique, présentant au moins deux colis pourvus respectivement d'un contenant étanche à l'eau et à l'air, rempli respectivement d'une quantité partielle du mortier frais sous la forme d'une masse fraîche minérale contenant de l'eau, dans lequel l'une des masses fraîches contient, outre l'eau et au moins un additif de mortier, seulement de l'hydrate de chaux-air et/ou de l'hydrate de chaux-dolomite en tant que l'un des composants de liant du mortier frais hydraulique et que l'autre masse fraîche contient, outre l'eau et au moins un additif de mortier, au moins une pouzzolane en mesure de réagir de manière hydraulique avec l'hydrate de chaux en tant que l'autre composant de liant du mortier frais hydraulique, dans lequel la quantité d'hydrate est adaptée à la quantité de la pouzzolane pour une prise hydraulique du mortier frais afin d'obtenir un mortier solide après un mélange des deux masses fraîches.

2. Emballage de vente selon la revendication 1,
**caractérisé en ce que**
au moins une poudre de pierre, en particulier une poudre de calcaire et/ou une poudre de quartz et/ou une autre poudre de pierre, est utilisée en tant qu'additif de mortier.

3. Emballage de vente selon la revendication 1 et/ou 2,
**caractérisé en ce que**
au moins une masse fraîche contient au moins un agent adjuvant de mortier et/ou de béton, en particulier un agent fluidifiant et/ou un agent de rétention d'eau et/ou un agent de réglage et/ou un agent antisédimentation et/ou un accélérateur.

4. Emballage de vente selon l'une quelconque ou plusieurs des revendications 1 à 3, **caractérisé en ce que**
au moins une masse fraîche contient au moins un agrégat de mortier, dans lequel de préférence la granulométrie maximale de l'agrégat est < 3 mm, en particulier < 1 mm.

5. Emballage de vente selon l'une quelconque ou plusieurs des revendications 1 à 4, **caractérisé en ce que**
le poids de l'emballage de vente est compris entre 10 et 25 kg, en particulier entre 12 et 20 kg.

6. Emballage de vente selon l'une quelconque ou plusieurs des revendications 1 à 5, **caractérisé en ce que**
le rapport de poids et/ou de volume des deux contenants est compris entre 2:1 et 1:2.

7. Emballage de vente selon la revendication 6,
**caractérisé en ce que**
les composants de mortier des deux masses fraîches sont identiques à l'exception des composants de liant, l'hydrate de chaux et la pouzzolane.

8. Emballage de vente selon l'une quelconque des revendications 1 à 7, **caractérisé en ce que**
les contenants sont constitués d'une matière plastique.

9. Emballage de vente selon la revendication 8,
**caractérisé en ce que**
les contenants sont constitués de sachets en matière plastique ou de boyaux en matière plastique flexibles.

10. Emballage de vente selon la revendication 9,
**caractérisé en ce que**
les colis sont reliés les uns aux autres, en particulier **en ce que** les contenants sont soudés les uns aux autres, sont réalisés dans ce cadre de préférence en une partie et sont rendus étanches les uns par rapport aux autres, ou **en ce que** les colis sont assemblés par un suremballage, par exemple par un film rétractable.

11. Emballage de vente selon l'une quelconque ou plusieurs des revendications 1 à 10,
**caractérisé en ce que**
les masses fraîches présentent des masses volumiques apparentes mesurées selon la norme EN 1015-6 comprises entre 1,5 et 2,1 en particulier comprises entre 1,6 et 1,9.

12. Emballage de vente selon l'une quelconque ou plusieurs des revendications 1 à 11,
**caractérisé en ce que**
les masses fraîches présentent des teneurs en eau comprises entre 15 et 40, en particulier comprises entre 20 et 30% en poids.

13. Emballage de vente selon l'une quelconque ou plusieurs des revendications 1 à 12,
**caractérisé en ce que**
les masses fraîches présentent des équivalents en eau/matière solide compris entre 0,2 et 0,4, en particulier compris entre 0,2 et 0,3.

14. Emballage de vente selon l'une quelconque ou plusieurs des revendications 1 à 13,
**caractérisé en ce que**
les masses fraîches présentent des valeurs d'étalement mesurées selon la norme EN 1015-3 comprises entre 15 et 25, en particulier comprises entre 15 et 20 cm.

15. Utilisation d'un emballage de vente selon l'une quelconque ou plusieurs des revendications 1 à 14 servant à fabriquer un mortier frais hydraulique latent,
**caractérisée en ce que**
les deux contenants de l'emballage de vente, affiliés par paire, sont ouverts et vidés, dans laquelle les deux masses fraîches sont versées dans un contenant de mélange et sont mélangées l'une à l'autre de sorte que les composants des deux masses fraîches forment un mortier frais minéral à prise hydraulique latente, dans la masse duquel les composants des masses fraîches sont répartis de manière homogène et optimale.
